# EUROPEAN PATENT SPECIFICATION

(11) **EP 3 779 214 B1**
(45) Date of publication and mention of the grant of the patent: **24.01.2024**
(21) Application number: 19786163.6
(22) Date of filing: 08.04.2019
(51) Int. Cl.: F16B 7/20, F16B 7/04, A63B 17/00, E04B 1/58, E04H 1/12, F16B 4/00

(54) **PAPER TUBE CONNECTION DEVICE**
PAPIERROHRVERBINDUNGSVORRICHTUNG
DISPOSITIF DE RACCORDEMENT DE TUBES EN PAPIER

(30) Priority: 13.04.2018 JP 2018077985
(43) Date of publication of application: 17.02.2021
(73) Proprietor: Moby Dick Inc., Tokyo 167-0041 (JP)
(72) Inventor: WATANABE, Kazutoshi, Tokyo 167-0041 (JP)
(74) Representative: Kilian Kilian & Partner mbB
(86) International application number: PCT/JP2019/015306
(87) International publication number: WO 2019/198660

(56) References cited:
- CZ-U1- 606
- GB-A- 1 313 299
- JP-A- H0 739 604
- JP-A- S50 108 623
- JP-A- 2006 204 776
- JP-A- 2006 204 776
- JP-A- 2017 210 993
- JP-U- H0 626 911
- JP-U- H0 724 396
- JP-U- S5 768 004
- JP-U- S49 133 420
- JP-Y2- S5 813 131

## Description

### Technical field

The present invention relates to a paper tube connection device that is used to build frameworks of various structures using paper tubes.

### Background Art

There has been conventionally known a paper tube connection device used to build frameworks of various indoor structures (for example, a shelf) using paper tubes (see Patent Document 1). This type of connection device is constructed mainly around a paper tube connector (generally called a joint). This paper tube connector includes a cuboidal base, and male protrusions that protrude from two or more respective faces among six faces defined by the base, and each of the male protrusions is press-fitted into a center hole of the paper tube so that two or more paper tubes are connected to one another.

Further prior art documents are GB1313299, JP H07 24396 U and JP 2006 204776 A. GB1313299 discloses a tube connection device according to the preamble of claim 1.

### Summary of the Invention

### Problem to be solved by the invention

In order to connect the tube connectors to each other in the above-described paper tube connector, there is no other way but to dispose a paper tube therebetween, which correspondingly imposes constraints on design flexibility in designing the framework of the structure using the paper tubes.

An object of the present invention, which has been made in view of the technical background as described above, is to provide a paper tube connection device with which the design flexibility can be improved in designing a framework of a structure using paper tubes. This object is achieved by the subject-matter of claim 1. Further advantageous modifications and embodiments of the invention are the subject-matter of the dependent claims. The invention is defined by claim 1.

Other aims and effects of the present invention will be appreciated easily by those skilled in the art with reference to the following description of the specification.

It is considered that the above-described technical problem can be solved by the paper tube connection device according to claim 1, having the following configuration.

Specifically, a paper tube connection device, as defined in claim 1 according to the present invention includes, amongst others, a paper tube connector that includes a polyhedral base, two or more male protrusions that protrude from two or more respective faces among all faces of the base, each of the male protrusions being to be inserted and press-fitted into a center hole of a target paper tube, and a female recess that opens at one face without any male protrusion among all faces of the base, the female recess being intended to receive a similar male protrusion of another paper tube connector to be press-fitted thereto.

Such a configuration enables establishment of a direct connection between the paper tube connectors through press-fitting between the male protrusion and the female recess. Therefore, even in combination with any basic structure of the paper tube connector itself, the design flexibility can be improved in designing the framework of the structure using the paper tubes.

In a preferred embodiment, the above-described paper tube connection device further includes an attachment, and the attachment may be provided with a male protrusion that is to be press-fitted into the female recess of the paper tube connector and a function achieving part that achieves a predetermined function.

According to such a configuration, further providing the above-described attachment to the female recess of the basic paper tube connector enables the function to be enhanced.

At this time, when the function achieving part of the attachment is a hinged male protrusion, a pivot or turning part of a door, for example, can be easily designed and constructed in the case where an interior structure (for example, an interior cabin) is built using the paper tubes.

When the function achieving part of the attachment is a blind plate for covering an opening of the female recess, it does not cause deterioration in the appearance when the female recess is not used.

Furthermore, the function achieving part of the attachment is an additional male protrusion, the number of protrusions for paper tube connection can be further increased by one.

In some aspects of the above-described paper tube connection device, the base may be formed in a regular hexahedral (cuboidal) shape.

At this time, when the number of male protrusions is five (protruding toward both of the positive side and the negative side of an X-axis, protruding toward both of the positive side and the negative side of a Y-axis, and protruding toward any one of the positive side and the negative side of a Z-axis), the paper tube connector can be widely used in all the connection parts of the framework of the structure having a rectangular parallelepiped shape in appearance. Note that the X-axis, the Y-axis, and the Z-axis are perpendicular to one another.

At this time, one or two or more ridges are formed along an insertion direction on each of at least three outer side surfaces of the male protrusion and each of at least three inner side surfaces of the female recess, the ridges on the recess side being alternately arranged with respect to the ridges on the protrusion side.

According to such a configuration, when the protrusion is press-fitted into the recess, both are in line contact with each other, whereby a pressure is concentrated on the contact portions, and the friction force is increased. Accordingly, a coming-off prevention effect can be enhanced.

The present invention in another aspect may be summarized as a kit for building a cabin formed of a set of the above-described paper tube connection device, a predetermined number of paper tubes, and plate members forming a wall body.

### Advantageous Effect of Invention

According to the present invention, establishment of a direct connection between the paper tube connectors is enabled through press-fitting between the male protrusion and the female recess. Therefore, even in combination with any basic structure of the paper tube connector itself, the design flexibility can be improved in designing the framework of the structure using the paper tubes.

### Brief Description of Drawings

[Figure 1] Figure 1 is an illustrative diagram of a paper tube connector.
[Figure 2] Figure 2 is a projection diagram of the paper tube connector.
[Figure 3] Figure 3 includes a sectional view and a perspective view of the paper tube connector.
[Figure 4] Figure 4 is an external perspective view of an interior playing house.
[Figure 5] Figure 5 is an illustrative diagram illustrating a series connecting mode of the paper tube connectors.
[Figure 6] Figure 6 is an illustrative diagram of a decorative plate member.
[Figure 7] Figure 7 is an assembling illustrative diagram of a leg member.
[Figure 8] Figure 8 is an illustrative diagram of a hinge member.
[Figure 9] Figure 9 is an assembling illustrative diagram of the hinge member.
[Figure 10] Figure 10 is an illustrative diagram illustrating a use example of the hinge member.

### Mode for carrying out the invention

Hereinafter, a preferred embodiment of a paper tube connection device according to the present invention will be described in detail with reference to the accompanying drawings.

As described above, the paper tube connection device according to the present invention includes a paper tube connector that includes a polyhedral base, two or more male protrusions that protrude from two or more respective faces among all faces of the base, each of the male protrusions being to be inserted and press-fitted into a center hole of a target paper tube, and a female recess that opens at one face without any male protrusion among all faces of the base, the female recess being intended to receive a similar male protrusion of another paper tube connector to be press-fitted thereto.

Such a configuration enables establishment of a direct connection between the paper tube connectors through press-fitting between the male protrusion and the female recess. Therefore, even in combination with any basic structure of the paper tube connector itself, the design flexibility can be improved in designing the framework of the structure using the paper tubes.

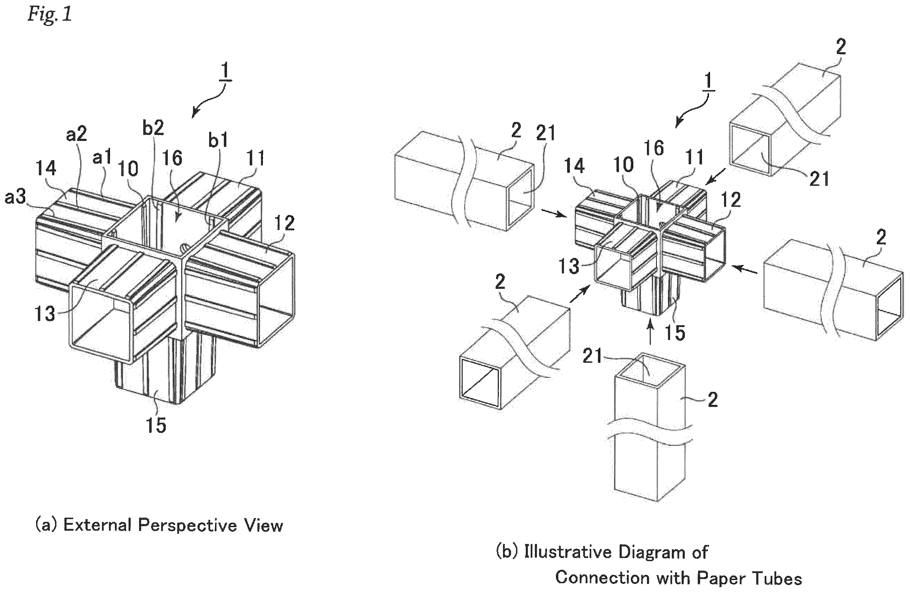

A more specific example of such a paper tube connection device will be described in detail with reference to Figure 1 to Figure 10. In this example, a regular hexahedron (cube) is adopted as a polyhedron formed by the base, and six faces are defined in an outer periphery of the base. In this example, male protrusions are formed on the five respective faces among such faces, while a female recess is formed on the remaining one face.

The paper tube connector having such five male protrusions can be applied to all of connection parts envisioned for the framework of a typical box-shaped structure, such as 1) a connection part for connecting two paper tubes in a linear fashion, 2) a connection part for connecting two paper tubes at a right angle, 3) a connection part for connecting three paper tubes to form a T shape, 4) a connection part for connecting three paper tubes to be perpendicular to one another, 5) a connection part for connecting four paper tubes to form a cross shape, and 6) a connection part for connecting five paper tubes by adding one paper tube perpendicularly to the paper tubes formed in a cross shape.

### <Paper Tube Connector>

As illustrated in Figure 1, this paper tube connection device includes one or two or more paper tube connectors 1 formed by a resin (for example, an ABS resin). Each of the paper tube connectors 1 includes a base 10 having a regular hexahedron shape (a cuboidal shape), five male protrusions (in this example, square protrusions each having a square annular shape in a sectional shape) 11 to 15 that protrude from five respective faces among six faces of the base 10 and are to be inserted and press-fitted into respective center holes (in this example, center holes each having a square shape in a sectional shape) 21 of target paper tubes (in this example, square paper tubes each having a square annular shape in a sectional shape) 2, and a female recess 16 that opens at one face without any male protrusion 11 to 15 among the six faces of the base 10, and receives a similar male protrusion of another paper tube connector to be press-fitted thereto. In this example, all the lengths of the five male protrusions 11 to 15 are equal, and are substantially the same as the depth of the female recess 16.

Such a configuration enables establishment of a direct connection between the paper tube connectors through press-fitting between one of the male protrusions 11 to 15 of the paper tube connector 1 and the female recess 16 of another paper tube connector 1 having any shape. Therefore, even in combination with any basic structure (the other paper tube connector 1 may be of a linear connection of two paper tubes, a right-angle connection of two paper tubes, a right-angle connection of three paper tubes, a cross-shaped connection of four paper tubes, or the like) of the paper tube connector itself, the design flexibility can be improved in designing the framework of the structure using the paper tubes.

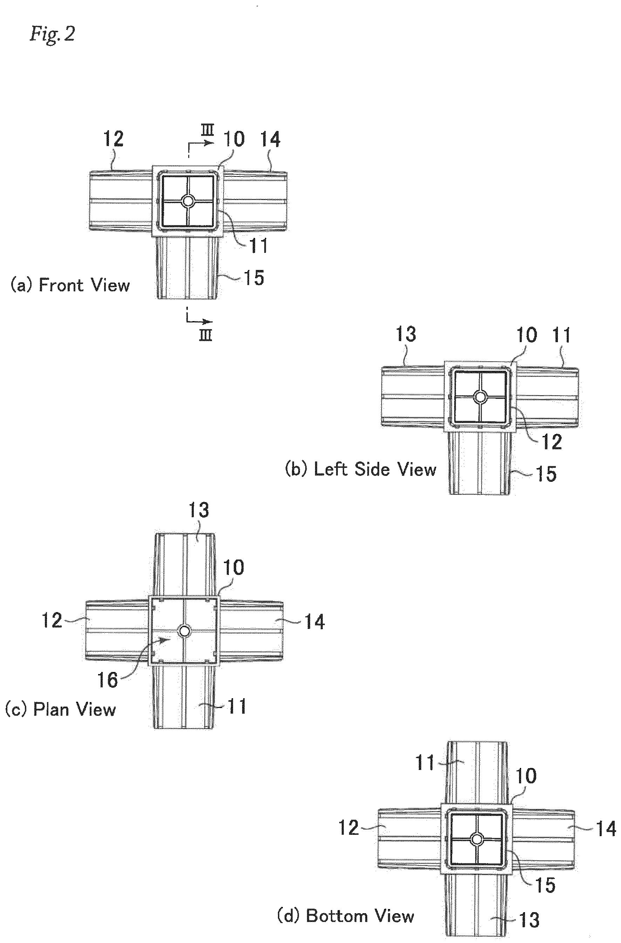

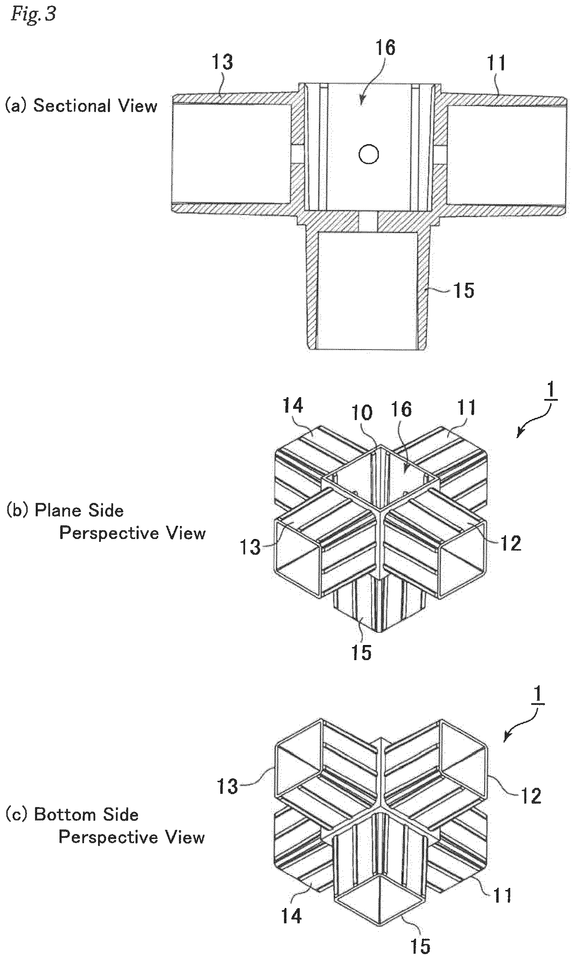

Note that Figure 2 and Figure 3 each are a diagram illustrating a structure of the paper tube connector 1 with excellent design and high precision. Figure 2 is a projection diagram of the paper tube connector, excluding a rear view (the same as a front view) and a right side view (the same as a left side view). Figure 3(A) is a sectional view taken along line III-III of Figure 2(A), and Figures 3(B) and 3(C) are perspective views from a top side and a bottom surface side, respectively.

As apparent from these figures, each of the male protrusions 11 to 15 is formed in a tapered shape, and three ridges a1, a2, and a3 are formed along an insertion direction on each of four outer peripheral side surfaces of the male protrusion (see Figure 1(A)). On the other hand, the female recess 16 has an almost constant diameter in the depth direction, and two ridges b1 and b2 are formed along the insertion direction on each of four inner peripheral side surfaces of the female recess (see Figure 1(A)). The ridges a1 to a3 and the ridges b1 and b2 have substantially the same height, and are alternately arranged with respect to one another so that the ridges do not interfere with one another when the male protrusion is press-fitted into the female recess.

With such a configuration, when the paper tubes 2 are press-fitted around the respective male protrusions 11 to 15, a close contact pressure between the male protrusion and the paper tube is concentrated on the lines along the ridges a1 to a3, such that each of the male protrusions 11 to 15 is firmly connected to the corresponding paper tube 2 through a friction force therebetween. Similarly, when the male protrusion of the paper tube connector 1 is press-fitted into the female recess 16 of another paper tube connector 1, the close contact pressure therebetween is concentrated on the lines along the ridges a1 to a3 and the ridges b1 and b2, such that each of the male protrusions 11 to 15 is firmly connected to the corresponding female recess 16 through a friction force therebetween.

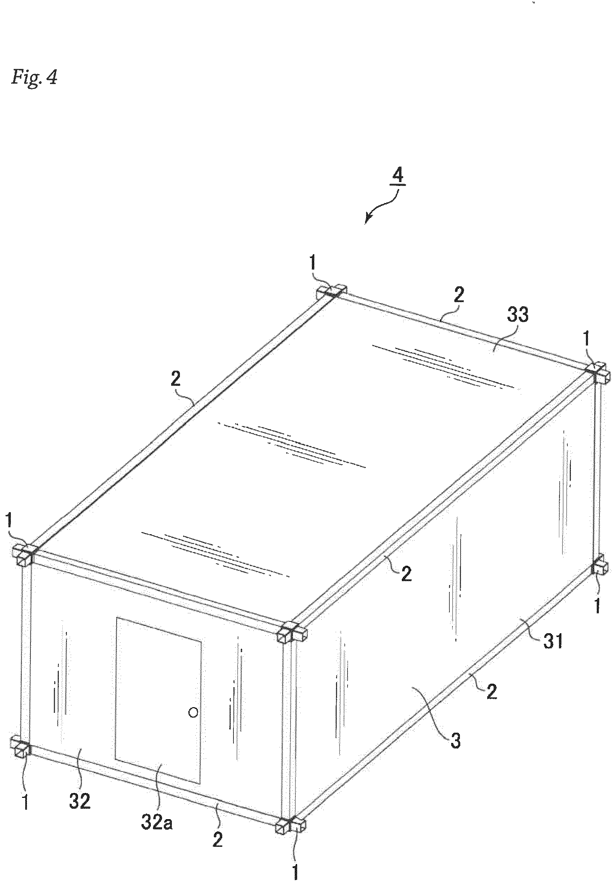

An interior cabin (used as, for example, a playing house for kids, a private room for adults, a private room at a shelter at the time of disaster, or the like) 4 built using the above-described eight paper tube connectors 1 is illustrated in Figure 4. As illustrated in the figure, in this example, a framework formed in a rectangular parallelepiped shape is built by connecting the paper tube connectors arranged at eight respective vertexes of the rectangular parallelepiped using the paper tubes 2, and corrugated cardboard plate materials 3 are bonded as left and right side wall plates 31 and 31, a front wall plate 32, and a rear wall plate (not illustrated) to the framework using a suitable adhesive or glue, whereby the interior cabin 4 is formed. The front wall plate 32 has an entrance door 32a formed by cutting out and hinge processing the corrugated cardboard plate material 3. Note that the material of the wall plate is not limited to the corrugated cardboard plate material, and various boards such as a compressed board, or a resin board may be used as the material of the wall plate.

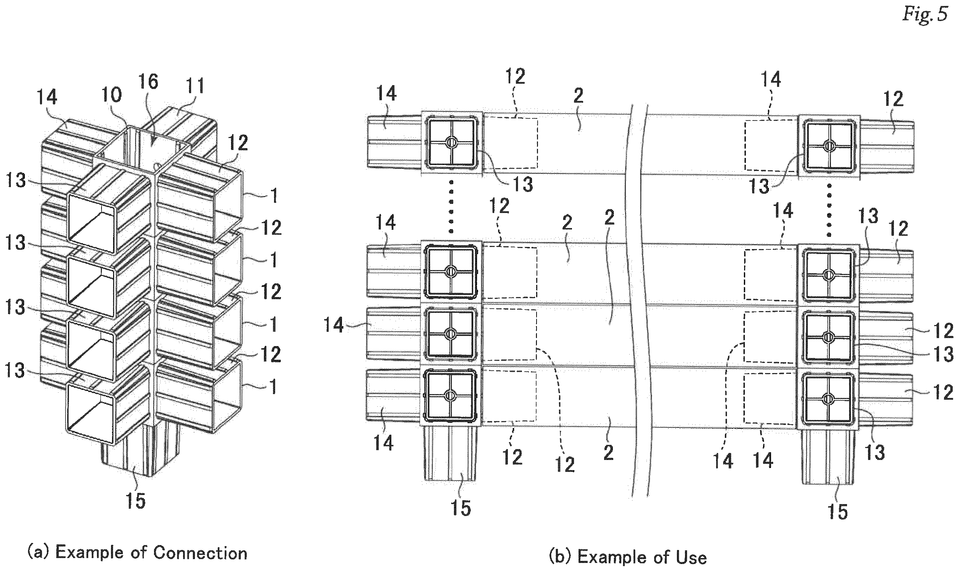

An example of a framework structure in which a plurality of the above-described paper tube connectors 1 are directly connected in one direction (series connection) is illustrated in Figure 5. As illustrated in the figure, in this example, the plurality of paper tube connectors 1 having the same structure are connected by press-fitting the respective male protrusions 15 into the corresponding female recesses 16 to form a columnar connection body connected in series, and the two columnar connection bodies are arranged in a pair on left and right sides. A plurality of paper tubes 2, 2, ···· are connected in parallel with one another between the two columnar connection bodies, to thereby form a hard wall body comprised of the parallel paper tubes.

### <Attachment>

As described above, the paper tube connection device according to the present invention may also include various attachments described below. The attachment is provided with a male protrusion to be press-fitted into the female recess 16 of the paper tube connector 1 and a function achieving part that achieves a predetermined function.

### [Attachment Having Blind Plate]

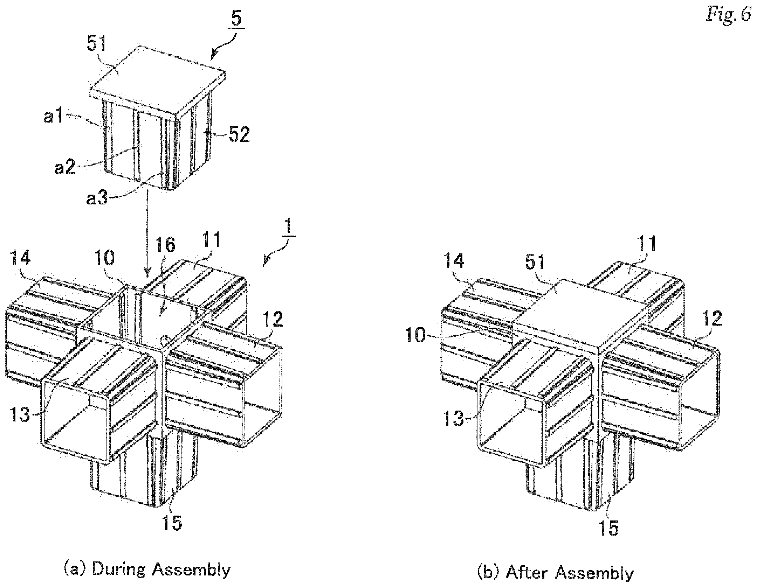

An example of an attachment having a blind plate functioning as a decorative plate, as the function achieving part is illustrated in Figure 6. In this example, an attachment 5 includes a blind plate 51 and a male protrusion 52 provided on one face side of the blind plate 51. Three ridges a1, a2, and a3 are formed on each of four outer peripheral side surfaces of the male protrusion 52, as described above.

According to thus configured attachment 5 having the blind plate, the male protrusion 52 is press-fitted into the female recess 16 of the paper tube connector 1 as illustrated in Figure 6(A) to cover an opening of the female recess 16 of the paper tube connector 1 with the blind plate 51 as illustrated in Figure 6(B), whereby the appearance can be improved.

### [Attachment Having Additional Male Protrusion]

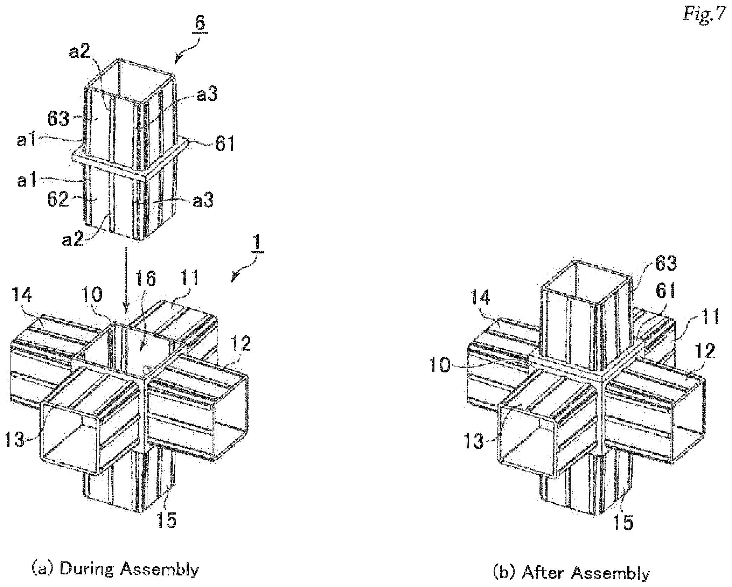

An example of an attachment having an additional male protrusion, as the function achieving part is illustrated in Figure 7. In this example, an attachment 6 includes a flange 61, a male protrusion 62 provided on one face side of the flange 61, and an additional male protrusion 63 provided on the other surface side of the flange 61. Three ridges a1, a2, and a3 are formed on each of four outer peripheral side surfaces of each of the male protrusions 62 and 63, as described above.

According to thus configured attachment 6 having the additional male protrusion, the male protrusion 62 is press-fitted into the female recess 16 of the paper tube connector 1 as illustrated in Figure 7(A) and one-directional male protrusion 63 is further added to the five-directional paper tube connector 1, thereby achieving a six-directional paper tube connector as illustrated in Figure 7(B).

### [Attachment Having Hinged Male Protrusions]

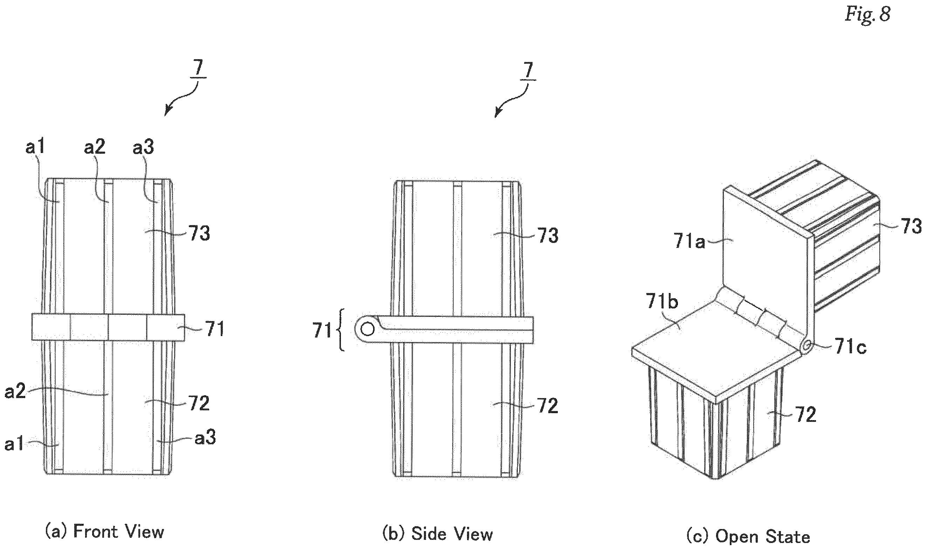

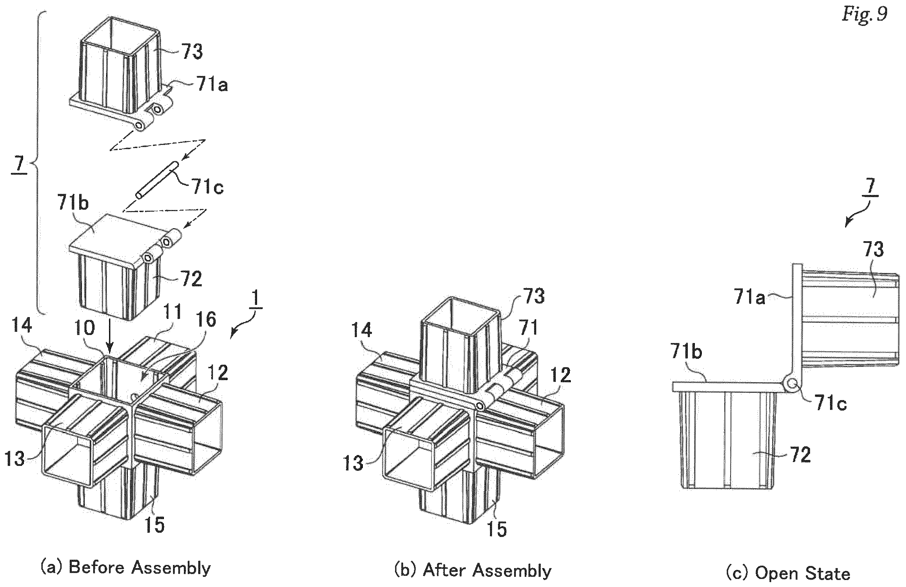

An example of an attachment having hinged male protrusions, as the function achieving part is illustrated in Figure 8. In this example, an attachment 7 includes a hinge portion 71, a male protrusion 72 provided on a first pivot plate 71b included in the hinge portion 71, and a male protrusion 73 provided on a second pivot plate 71a included in the hinge portion 71. Three ridges a1, a2, and a3 are formed on each of four outer peripheral side surfaces of each of the male protrusions 72 and 73, as described above. The detail of the hinge portion 71 is illustrated in Figure 9(A). As illustrated in the figure, the hinge portion 71 includes the first pivot plate 71b having a pin passing portion protruding from one side edge thereof, the second pivot plate 71a having a pin passing portion protruding from one side edge thereof, and a hinge pin 71c passing through the above-described pin passing portions.

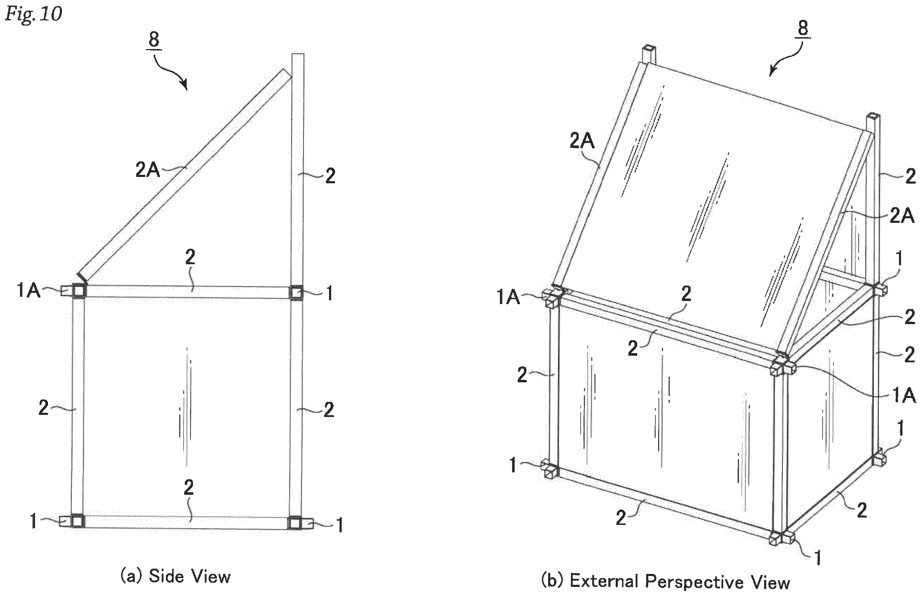

According to thus configured attachment 7 having the hinged male protrusions, the male protrusion 72 is press-fitted into the female recess 16 of the paper tube connector 1 as illustrated in Figure 9(A), so that the hinged male protrusion 73 for connecting the paper tube 2 can be added to the five-directional paper tube connector 1. Since such a hinged paper tube connector 1A is pivotable between an open state and a closed state as illustrated in Figures 9(A) and 9(B), the hinged paper tube connector 1A can be attached to an inclined lower end of the paper tube 2A serving as a rafter of a roof, for example, as illustrated in Figures 10(A) and 10(B), thereby forming an interior cabin 8 having a roof inclined at an arbitrary inclined angle, or the hinged paper tube connector 1A can be attached to a side edge of a paper tube type rectangular frame serving as a hinged door (not illustrated), thereby easily forming a pivotable hinged door.

### <Others>

The present invention is defined by the scope of the claims. In particular, the configuration of the base is not limited to a regular hexahedron, and it is needless to say that the present invention can be widely applied to the paper tube connector including a base having a polyhedron shape such as a regular tetrahedron shape and a regular octahedron shape.

In addition, in the above-described embodiment, five male protrusion are provided to the paper tube connector including a hexahedral base, but in the paper tube connector of the present invention, the number of male protrusions may be any of two (linear connection, right-angle connection), three (connection with 90 degree angle difference from one another), and four (a cross-shaped connection).

In the above-described example, each cross section of the male protrusion, the female recess, and the paper tube is formed in a square shape, but in the paper tube connector of the present invention, the cross section of them may be formed in other regular polygonal shape or a circular shape.

Furthermore, in the above-described embodiment, all the lengths of the five male protrusions 11 to 15 are equal, but in the paper tube connector of the present invention, the lengths of the male protrusions may be different as shown in an example in which only one of the plurality of male protrusions is longer than the other male protrusions having the same length.

### Industrial Applicability

The present invention can be utilized in an industry of manufacturing a paper tube connector using a resin molding technique.

### Reference Signs List

- 1: paper tube connector
- 1A: hinged paper tube connector
- 2: paper tube
- 3: corrugated cardboard plate material
- 4: interior cabin
- 5: attachment having blind plate
- 6: attachment having additional male protrusion
- 7: attachment having hinged male protrusion
- 8: interior cabin with inclined roof
- 10: attachment having base
- 11: male protrusion
- 12: male protrusion
- 13: male protrusion
- 14: male protrusion
- 15: male protrusion
- 16: female recess
- 21: center hole
- 51: blind plate
- 52: peripheral side surface
- 61: flange
- 62: male protrusion
- 63: additional male protrusion
- 71: hinge portion
- 72: male protrusion
- 73: male protrusion
- a1, a2, a3: ridge on peripheral side surface of male protrusion
- b1, b2: ridge on peripheral side surface of female recess

## Claims

1. A paper tube connection device, comprising:
a paper tube connector (1) including:
a polyhedral base (10);
two or more male protrusions (11-15) that protrude from two or more respective faces among all faces of the base (10), each of the male protrusions (11-15) being configured to be inserted and press-fitted into a center hole (21) of a target paper tube (2); wherein
one or two or more ridges (a1, a2, a3) are formed along an insertion direction on each of at least three outer side surfaces of the male protrusion (11-15)
**characterized in that**
said paper tube connector (1) further comprises a female recess (16) that opens at one face without any male protrusion (11-15) among all faces of the base (10), the female recess (16) being configured to receive a similar male protrusion (11-15) of another paper tube connector (1) to be press-fitted thereto, and **in that**
one or two or more ridges (bl, b2) are formed along an insertion direction on ana each of at least three inner side surfaces of the female recess (16), the ridges (b1, b2) on the recess side being alternately arranged with respect to the ridges (a1, a2, a3) on the protrusion side.

2. The paper tube connection device according to claim 1, further comprising:
an attachment (5; 6; 7),
wherein the attachment (5; 6; 7) is provided with:
a male protrusion (52; 62; 72) that is to be press-fitted into the female recess (16) of the paper tube connector (1); and
a function achieving part (51; 63; 73) that achieves a predetermined function.

3. The paper tube connection device according to claim 2, wherein
the function achieving part is a hinged male protrusion (73).

4. The paper tube connection device according to claim 2, wherein
the function achieving part is a blind plate (51) for covering an opening of the female recess (16).

5. The paper tube connection device according to claim 2, wherein
the function achieving part is an additional male protrusion (63).

6. The paper tube connection device according to claim 1, wherein
the base (10) is formed in a regular hexahedral shape.

7. The paper tube connection device according to claim 6, wherein
the number of the male protrusions (11-15) is five.

8. A kit for building a cabin (4; 8), the kit being formed of a set of the paper tube connection device according to any one of claims 1 to 7, a predetermined number of paper tubes (2), and plate members (3) forming a wall.

## Patentansprüche

1. Vorrichtung zur Verbindung von Papierrohren, aufweisend:
einen Papierrohrverbinder (1), umfassend:
eine polyedrische Basis (10);
zwei oder mehr männliche Vorsprünge (11-15), die von zwei oder mehr jeweiligen Flächen unter allen Flächen der Basis (10) vorstehen, wobei jeder der männlichen Vorsprünge (11-15) eingerichtet ist, in ein Mittelloch (21) eines Zielpapierrohres (2) eingesetzt und eingepresst zu werden; wobei
eine, zwei oder mehr Rippen (a1, a2, a3) entlang einer Einsetzrichtung auf jeder von mindestens drei äußeren Seitenoberflächen des männlichen Vorsprungs (11-15) ausgebildet sind
**dadurch gekennzeichnet, dass**
der Papierrohrverbinder (1) außerdem eine weibliche Aussparung (16) umfasst, die sich an einer Fläche ohne jeglichen männlichen Vorsprung (11-15) unter allen Flächen der Basis (10) öffnet, wobei die weibliche Aussparung (16) eingerichtet ist, einen ähnlichen männlichen Vorsprung (11-15) eines anderen Papierrohrverbinders (1) aufzunehmen, der eingepresst wird,
und dass
eine oder zwei oder mehr Rippen (b1, b2) entlang einer Einsetzrichtung auf jeder der mindestens drei inneren Seitenoberflächen der weiblichen Aussparung (16) ausgebildet sind, wobei die Rippen (b1, b2) auf der Aussparungsseite abwechselnd mit den Rippen (a1, a2, a3) auf der Vorsprungsseite angeordnet sind.

2. Vorrichtung zur Verbindung von Papierrohren gemäß Anspruch 1, ferner aufweisend:
ein Aufsatz (5; 6; 7),
wobei der Aufsatz (5; 6; 7) vorgesehen ist mit:
einem männlichen Vorsprung (52; 62; 72), der in die weibliche Aussparung (16) des Papierrohrverbinders (1) einpressbar ist; und
einem funktionserfüllenden Teil (51; 63; 73), das eine vorbestimmte Funktion erfüllt.

3. Vorrichtung zur Verbindung von Papierrohren gemäß 2, wobei
der funktionserfüllende Teil ein klappbarer männlicher Vorsprung (73) ist.

4. Vorrichtung zur Verbindung von Papierrohren gemäß 2, wobei
das funktionserfüllende Teil eine Blindplatte (51) zur Abdeckung einer Öffnung der weiblichen Aussparung (16) ist.

5. Vorrichtung zur Verbindung von Papierrohren gemäß 2, wobei
der funktionserfüllende Teil ein zusätzlicher männlicher Vorsprung (63) ist.

6. Vorrichtung zur Verbindung von Papierrohren gemäß 1, wobei
die Basis 10 regelmäßig hexaedrisch geformt ist.

7. Vorrichtung zur Verbindung von Papierrohren gemäß 6, wobei
die Anzahl der männlichen Vorsprünge (11-15) fünf beträgt.

8. Bausatz zum Bau einer Hütte (4; 8), wobei der Bausatz aus einem Satz der Vorrichtungen zur Verbindung von Papierrohren gemäß der Ansprüche 1 bis 7, einer vorbestimmten Anzahl von Papierrohren (2) und eine Wand bildenden Plattenelementen (3) gebildet ist.

## Revendications

1. Dispositif de raccordement de tubes en papier comprenant :
un connecteur de tubes en papier (1) comprenant :
une base polyèdre (10) ;
deux saillies mâles ou plus (11-15) qui font saillie de deux faces respectives ou plus parmi toutes les faces de la base (10), chacune des saillies mâles (11-15) étant configurée pour être insérée et montée à la presse dans un trou central (21) d'un tube en papier cible (2) ;
dans lequel :
une ou deux crêtes ou plus (a1, a2, 3a) sont formées le long d'une direction d'insertion sur chacune d'au moins trois surfaces latérales externes de la saillie mâle (11-15),
**caractérisé en ce que** :
ledit connecteur de tube en papier (1) comprend en outre un évidement femelle (16) qui s'ouvre au niveau d'une face sans aucune saillie mâle (11-15) parmi toutes les faces de la base (10), l'évidement femelle (16) étant configuré pour recevoir une saillie mâle (11-15) similaire d'un autre connecteur de tube en papier (1), destinée à être montée à la presse sur ce dernier, et **en ce que** :
une ou deux crêtes ou plus (b1, b2) sont formées le long d'une direction d'insertion sur chacune d'au moins trois surfaces latérales internes de l'évidement femelle (16), les crêtes (b1, b2) du côté de l'évidement étant agencées de manière alternée par rapport aux crêtes (a1, a2, a3) du côté de la saillie.

2. Dispositif de raccordement de tubes en papier selon la revendication 1, comprenant en outre :
une fixation (5 ; 6 ; 7),
dans lequel la fixation (5 ; 6 ; 7) est prévue avec :
une saillie mâle (52 ; 62 ; 72) qui doit être montée à la presse dans l'évidement femelle (16) du connecteur de tube en papier (1) ; et
une partie d'obtention de fonction (51 ; 63 ; 73) qui obtient une fonction prédéterminée.

3. Dispositif de raccordement de tubes en papier selon la revendication 2, dans lequel :
la partie d'obtention de fonction est une saillie mâle articulée (73).

4. Dispositif de raccordement de tubes en papier selon la revendication 2, dans lequel :
la partie d'obtention de fonction est une plaque borgne (51) pour recouvrir une ouverture de l'évidement femelle (16).

5. Dispositif de raccordement de tubes en papier selon la revendication 2, dans lequel :
la partie d'obtention de fonction est une saillie mâle supplémentaire (63).

6. Dispositif de raccordement de tubes en papier selon la revendication 1, dans lequel :
la base (10) est formée selon une forme d'hexaèdre régulier.

7. Dispositif de raccordement de tubes en papier selon la revendication 6, dans lequel :
le nombre de saillies mâles (11-15) est de cinq.

8. Kit pour construire une cabine (4 ; 8), le kit étant formé avec un ensemble composé du dispositif de raccordement de tubes en papier selon l'une quelconque des revendications 1 à 7, d'un nombre prédéterminé de tubes en papier (2) et d'éléments de plaque (3) formant une paroi.
